**Europäisches Patentamt**

**European Patent Office**

**Office européen des brevets**

(19)

(11) Veröffentlichungsnummer: **0 311 895**

**A1**

(12) # EUROPÄISCHE PATENTANMELDUNG

(21) Anmeldenummer: **88116530.2**

(22) Anmeldetag: **06.10.88**

(51) Int. Cl.⁴: **B23Q 1/26 , F16C 29/08 , B23Q 11/08 , F16C 29/04**

(30) Priorität: **14.10.87 DE 3734721**
**13.01.88 DE 3800698**

(43) Veröffentlichungstag der Anmeldung:
**19.04.89 Patentblatt 89/16**

(84) Benannte Vertragsstaaten:
**CH DE ES FR GB IT LI SE**

(71) Anmelder: **CHIRON-WERKE GMBH & CO. KG**
**Talstrasse 23**
**D-7200 Tuttlingen(DE)**

(72) Erfinder: **Winkler, Hans-Henning, Dr.**
**Brunnentalstrasse 88**
**D-7200 Tuttlingen(DE)**

(74) Vertreter: **Witte, Alexander, Dr.-Ing.**
**Schickhardtstrasse 24**
**D-7000 Stuttgart 1(DE)**

(54) **Werkzeugmaschine.**

(57) Eine Werkzeugmaschine weist zwei entlang einer Achse (16) relativ zueinander verfahrbare Bewegungseinheiten, insbesondere einen Spindelstock (10) und ein Maschinenbett (15) auf. An einer Bewegungseinheit ist eine Führungsschiene (13) zum Führen der verfahrbaren anderen Bewegungseinheit an einer Seite der Führungsschiene befestigt. Die Führungsschiene (13) weist von ihrer Oberseite ausgehende Durchgangs-Stufenbohrungen (20) für Befestigungsschrauben auf. Es sind ferner Mittel zum Abdecken eines Innenraums (23) der Durchgangs-Stufenbohrung (20) oberhalb der eingeschraubten Befestigungsschraube (14) vorgesehen. Um eine einfach anzubringende Abdeckung der Innenräume (23) sicherzustellen, die Beschädigungen durch Metallspäne unzugänglich ist, die beim relativen Verfahren der Bewegungseinheiten an der Oberfläche der Führungsschiene (13) entlang geschoben werden, sind die Durchgangs-Stufenbohrungen (20) an der Oberseite (25) mittels eines aufgeklebten Abdeckblechs (30) abgedeckt, das sich in Richtung der Achse (16) und vorzugsweise über die ganze Länge der Führungsschiene (13) erstreckt, wobei das Lager (12) an einer Längsseite 24 der Führungsschiene (13) angeordnet und die Oberseite (25) von Krafteinleitung frei ist

Fig.2

## Werkzeugmaschine

Die Erfindung betrifft eine Werkzeugmaschine mit zwei entlang einer Achse relativ zueinander verfahrbaren Bewegungseinheiten, insbesondere einem Spindelstock und einem Maschinenbett, mit einer an einer Bewegungseinheit befestigten Führungsschiene, mit einem Lager zum Führen der verfahrbaren anderen Bewegungseinheit an einer Seite der Führungsschiene, wobei die Führungsschiene von ihrer Oberseite ausgehende Durchgangs-Stufenbohrungen für Befestigungsschrauben aufweist und Mittel zum Abdecken eines Innenraums der Durchgangs-Stufenbohrung oberhalb der eingeschraubten Befestigungsschrauben vorgesehen sind.

Eine Werkzeugmaschine der vorstehend genannten Art ist beispielsweise als Erzeugnis der Anmelderin mit der Typenbezeichnung FZ 16 bekannt.

Bei Werkzeugmaschinen sind in der Regel ein Maschinenbett oder ein Werkstücktisch relativ zu einer Spindel der Werkzeugmaschine entlang linearer Achsen verfahrbar, um eingespannte Werkzeuge in Richtung kartesischer Koordinaten relativ zu einem Werkstück bewegen zu können. Es sind hierzu unterschiedliche kinematische Lösungen bekannt, bei denen entweder der Werkstücktisch oder der Spindelstock oder beide entlang gleicher oder unterschiedlicher Achsen relativ zum Maschinenbett verschiebbar sind, wobei die Spindel horizontal oder vertikal ausgerichtet sein kann.

Bei der bekannten Werkzeugmaschine ist ein Spindelstock gesamthaft in einer horizontalen Achse relativ zu einem ortsfesten Maschinenbett verfahrbar. Hierzu sind zwei parallele Führungsschienen mittels Maschinenschrauben an dem Maschinenbett festgeschraubt. Der Spindelstock ist an seiner Unterseite mit zugehörigen Wagen versehen, die entlang von Längs-Kugellagern auf den Führungsschienen laufen.

Zur Befestigung der Führungsschienen am Maschinenbett sind Durchgangs-Stufenbohrungen quer zur Längsachse der Führungsschienen in diesen vorgesehen, so daß die Maschinenschrauben von oben in die Führungsschienen eingeführt werden können, um unten in zugehörige Gewindebohrungen des Maschinenbetts eingeschraubt zu werden. Die hierzu verwendeten Führungsschienen sind an ihrer Oberseite, wo die Durchgangs-Stufenbohrungen nach oben ausmünden, mit einer flachen, durchgehenden Längsnut versehen.

Es hat sich im praktischen Betrieb derartiger Werkzeugmaschinen herausgestellt, daß insbesondere bei horizontal verlaufenden Führungsschienen die nach oben weisenden Innenräume der Stufenbohrungen oberhalb der Köpfe der Maschinenschrauben sich mit Bohrspänen oder Bohröl zusetzen können. Da dies zu einer Beeinträchtigung der Präzision der Werkzeugmaschine führen kann, hat man in der Vergangenheit versucht, dieses Problem dadurch zu lösen, daß man die freibleibenden Innenräume der Durchgangs-Stufenbohrungen oberhalb der Köpfe der Maschinenschrauben mit einem Kunstharz vergossen hat.

Allerdings hat sich auch diese Vorgehensweise im Langzeitbetrieb nicht bewährt, weil beim Verfahren des Spindelstocks auf den Führungsschienen im Bereich der Führungsschienen Bohrspäne, auch kleinste Bohrspäne vor den Wagen des Spindelstocks mit Dichtlippen hergeschoben werden und nach und nach das eingegossene Kunststoffharz wieder aus dem Innenraum herauskratzen. Mit der Zeit entstehen auf diese Weise konkave Einbuchtungen im Kunststoff und damit wieder eine Ablagerungsmöglichkeit für scharfkantige Metallspäne.

Man hat ferner versucht, das zuvor genannte Problem durch Einsetzen von Kuntststoffstopfen zu beheben, jedoch hat auch diese Vorgehensweise nicht zum Erfolg geführt, weil auch die Kunststoffstopfen an ihrer Oberseite ausgekratzt wurden und sich teilweise sogar aus ihrer formschlüssigen Verankerung lösten.

Aus der DD-PS 237 805 ist eine Anordnung zum Befestigen von Führungsbahnleisten auf Maschinenkörpern bekannt. Auch bei dieser bekannten Anordnung werden Durchgangsbohrungen verwendet, durch die hindurch sich Maschinenschrauben erstrecken. Die Durchgangsbohrungen sind an ihrer Oberseite über eine in der Oberfläche der Führungsbahnleiste durchgehende Nut verbunden, in die eine Leiste einpaßbar oder einfügbar ist, beispielsweise mittels Pressen, Schrumpfen oder Kleben. Bei der bekannten Anordnung wird auf diese Weise jedoch eine Führungsfläche gebildet, so daß die eingepaßte Leiste von gleicher Materialbeschaffenheit und -güte sein muß. Es entsteht also bei der bekannten Anordnung eine Führungsfläche, d.h. eine Fläche, in die Kräfte eingeleitet werden, die aus mehreren Teilen besteht. Aufgrunddessen muß die so gebildete Oberfläche nach dem Einpassen der Leisten noch nachbearbeitet, nämlich z.B. durch Schleifen fein bearbeitet werden.

Diese bekannte Anordnung hat damit den Nachteil, daß zum Abdecken der Durchgangsbohrungen ein erheblicher Aufwand getrieben werden muß, weil die Leisten zunächst nach ihrer Materialbeschaffenheit oder -güte exakt ausgewählt und dann präzise eingepaßt werden müssen, um schließlich noch in einem weiteren Arbeitsgang an der Oberfläche nachbearbeitet zu werden. Die Gesamtheit dieser Maßnahmen stellt damit den erreichbaren Erfolg in Frage, weil bei hohen Anforderungen der zu treibende Aufwand größer werden kann als der erzielbare Nutzen.

Der Erfindung liegt daher die Aufgabe zugrunde, eine Werkzeugmaschine der eingangs genannten Art dahingehend weiterzubilden, daß die frei liegenden Innenräume der Durchgangs-Stufenbohrungen der Führungsschienen in einfacher Weise, zuverlässig und ohne Beeinträchtigungen im Langzeitbetrieb abgedeckt werden.

Diese Aufgabe wird erfindungsgemäß dadurch gelöst, daß die Durchgangs-Stufenbohrungen an der Oberseite mittels eines streifenförmigen Abdeckteils abgedeckt sind, das sich in Richtung der Achse und vorzugsweise über die ganze Länge der Führungsschiene erstreckt, daß das Lager an einer Längsseite der Führungsschiene angeordnet ist und daß die Oberseite von Krafteinleitung frei ist.

Die der Erfindung zugrundeliegende Aufgabe wird auf diese Weise vollkommen gelöst, weil das streifenförmige Abdeckteil keine punktuellen Angriffspunkte für Metallspäne bildet, die von den Wagen des Spindelstocks beim Verfahren des Spindelstocks über die Oberseite der Führungsschiene geschoben werden. Die frei liegenden Innenräume der Durchgangs-Stufenbohrungen werden auf diese Weise auch im Langzeitbetrieb der Werkzeugmaschine zuverlässig abgedeckt und es kann nicht zur Bildung von Nestern und Ablagerungen von Metallspänen im Bereich der Führungsschienen mehr kommen.

Die erfindungsgemäße Werkzeugmaschine hat damit auch gegenüber der vorbekannten Anordnung mit eingepaßten Leisten den Vorteil, daß die Abdeckung der Durchgangsbohrungen an sich unkritisch ist, weil sie an einer Seite einer Führungsleiste vorgenommen wird, die an der Führung unbeteiligt ist, während bei der bekannten Anordnung eine Führungsfläche in Mitleidenschaft gezogen wurde, die gerade zur Führung diente. Da bei der erfindungsgemäßen Werkzeugmaschine das streifenförmige Abdeckteil somit nur eine Abdeckfunktion wahrnimmt, ohne selbst mechanisch belastet zu sein, stellen sich auch keinerlei Anforderungen hinsichtlich besonderer Materialbeschaffenheit oder -güte und es ist auch nicht erforderlich, die mit dem streifenförmigen Abdeckteil versehene Oberseite der Führungsschiene nach dem Anbringen des Abdeckteils nochmals spanabhebend oder sonstwie nachzubearbeiten.

Bei einer bevorzugten Ausgestaltung der Erfindung ist das Abdeckteil als aufgeklebtes Abdeckblech ausgebildet.

Diese Maßnahme hat den Vorteil, daß die Langzeitstabilität der Anordnung beträchtlich erhöht wird, weil als Abdeckblech ein besonders festes Material mit nahezu beliebig harter Oberfläche gewählt werden kann, das den entlanggeschobenen Metallspänen keinerlei Angriffspunkt bietet. Da die auf das Abdeckteil wirkenden Längskräfte, die von den Metallspänen aufgebracht werden, relativ klein sind, ist eine Befestigung des Abdeckteils durch Aufkleben in aller Regel völlig ausreichend, weil vor allem bei einem Abdeckblech, das sich über die gesamte Länge der Führungsschiene erstreckt, eine genügend große Klebefläche ergibt, die einen sicheren Halt des Abdeckblechs gewährleistet.

Besonders bevorzugt ist, wenn bei diesem Ausführungsbeispiel das Abdeckblech nur in Bereichen außerhalb der Durchgangsbohrung auf die Führungsschiene aufgeklebt ist.

Diese Maßnahme hat den Vorteil, daß das Abdeckblech, falls je eine Demontage der Führungsschiene erforderlich sein sollte, mit verhältnismäßig geringem Aufwand von der Führungsschiene gelöst werden kann, insbesondere dann, wenn das Abdeckblech nur an wenigen Punkten in den Bereichen zwischen den Durchgangsbohrungen auf die Führungsschiene aufgeklebt ist. Das nur bereichsweise Ankleben des Abdeckblechs hat dabei den wesentlichen Vorteil, daß die Durchgangsbohrungen selbst von Klebstoff frei sind, so daß bei wieder-entferntem Abdeckblech die Befestigungsschrauben ohne weiteres gelöst werden können.

Bei einer weiteren besonders bevorzugten Ausgestaltung der Erfindung ist das Abdeckteil in eine Längsnut eingelegt, die sich über die Länge der Führungsschiene erstreckt und in die die Innenräume der Durchgangs-Stufenbohrung münden.

Diese Maßnahme hat den Vorteil, daß auch bei kommerziell erhältlichen Führungsschienen mit durchgehender Längsnut nicht nur eine zuverlässige Abdeckung der Durchgangs-Stufenbohrungen erreicht wird, es wird vielmehr auch eine gleichmäßig plane Oberfläche der Führungsschiene dann erreicht, wenn die Dicke des Abdeckteils, insbesondere des eingeklebten Abdeckblechs gerade so groß ist, wie die Tiefe der Längsnut, unter Berücksichtigung der Dicke der erforderlichen Klebstoffschicht.

Entsprechendes gilt bei einer anderen Variante der Erfindung, bei der das Abdeckteil sich über die gesamte Breite der Führungsschiene erstreckt.

Bei diesem Ausführungsbeispiel der Erfindung ergibt sich der Vorteil, daß in jedem Fall eine plane, durchgehende Oberfläche der Führungsschiene entsteht, unabhängig davon, ob die Oberfläche der Führungsschiene von Hause aus mit einer Nut oder anderen Vertiefungen versehen ist oder nicht.

Weitere Vorteile ergeben sich aus der Beschreibung und der beigefügten Zeichnung.

Es versteht sich, daß die vorstehend genannten und die nachstehend noch erläuterten Merkmale nicht nur in der jeweils angegebenen Kombination sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine Frontansicht, teilweise aufgeschnitten, durch ein erstes Ausführungsbeispiel einer Längsführung einer erfindungsgemäßen Werkzeugmaschine, jedoch vor dem Anbringen einer Abdeckung;

Fig. 2 eine Darstellung, ähnlich Fig. 1, die im Ausschnitt eine teilweise aufgebrochene Frontansicht einer Führungsschiene mit eingebrachter Abdeckung zeigt;

Fig. 3 eine Variante zum Ausführungsbeispiel der Fig. 2.

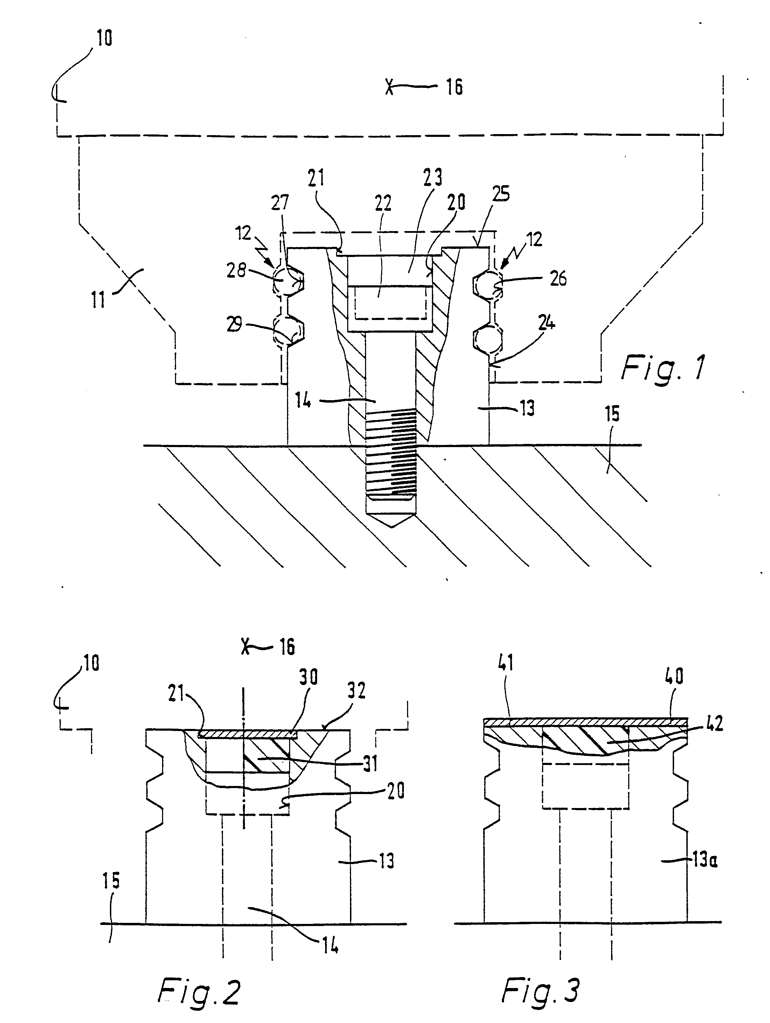

In Fig. 1 bezeichnet 10 insgesamt einen Spindelstock einer Werkzeugmaschine, der an seiner Unterseite mit einem Wagen 11 versehen ist. Der Spindelstock 10 ist in der Regel mit zwei Wagen 11 versehen, in der Zeichnung ist jedoch der Übersichtlichkeit halber nur einer dieser Wagen dargestellt.

Der Spindelstock 10 läuft mit seinen Wagen 11 mittels einer Längs-Kugellagerung 12, die in Fig. 1 nur äußerst schematisch angedeutet ist, entlang einer, zweier oder mehrerer paralleler Führungsschienen 13. Jede Führungsschiene 13 ist mittels Maschinenschrauben 14 in einem ortsfesten Maschinenbett 15 festgeschraubt.

Auf diese Weise ergibt sich eine Verfahrbarkeit des Spindelstocks 10 in Richtung einer Achse 16 senkrecht zur Zeichenebene der Fig. 1.

Es sei an dieser Stelle nochmals betont, daß die in Fig. 1 bis 3 dargestellten Ausführungsbeispiele sich am Fall eines Spindelstocks 10 orientieren, der entlang einer Horizontalebene auf den Führungsschienen 13 relativ zu einem raumfesten Maschinenbett 15 verfahrbar ist. Die Erfindung ist jedoch nicht auf dieses Ausführungsbeispiel eingeschränkt, weil die Führungsschienen 13 selbstverständlich auch in vertikaler Richtung verlaufen und andere Bewegungseinheiten der Werkzeugmaschine gegeneinander verfahrbar gestalten können, ohne daß dies den Rahmen der vorliegenden Erfindung verläßt.

Die Führungsschienen 13 sind, über ihre Länge verteilt, mit mehreren Durchgangs-Stufenbohrungen 20 versehen, durch die die Maschinenschrauben 14 geführt sind. So können die Führungsschienen 13 beispielsweise zwischen 30 und 300 cm lang sein und im Abstand von zwischen 6 und 12 cm zueinander angeordnet sein.

Die in den Fig. 1 und 2 dargestellte Führungsschiene 13 ist an ihrer Oberseite mit einer über die gesamte Länge der Führungsschiene 13 durchgehenden flachen Längsnut 21 versehen. Durch die Längsnut 21 hindurch sind Schraubenköpfe 22 der Maschinenschrauben 14 zugänglich, wobei im eingeschraubten Zustand der Maschinenschraube 14 oberhalb der Schraubenköpfe 22 ein frei bleibender Innenraum 23 der Durchgangs-Stufenbohrung 20 verbleibt.

Die Längs-Kugellagerung 12 ist erfindungsgemäß an Längsseiten 24 der Führungsschiene 13 wirksam, während deren Oberseite 25, wie deutlich aus Fig. 1 zu entnehmen ist, von Krafteinleitung frei ist.

Die Längs-Kugellagerung 12 umfaßt Vertiefungen 26 im Wagen 11 sowie komplementäre Längsnuten 27 in den Längsseiten 24 der Führungsschiene 13. In die Vertiefungen 26 sind Kugeln 28 eingesetzt, die andererseits auch in den Längsnuten 27 laufen, so daß der Wagen 11 in Längsrichtung, d.h. in Richtung der Achse 16 in der Führungsschiene 13 laufen kann. Mit 29 sind die Auflageflächen an der Führungsschiene 13 bezeichnet, in die die Gewichtskraft, d.h. das Eigengewicht von Spindelstock 10 und Wagen 11 eingeleitet wird.

Erfindungsgemäß werden die Durchgangs- Stufenbohrungen 20 an ihrer Oberseite dadurch abgedeckt, daß ein streifenförmiges Abdeckteil in Längsrichtung der Führungsschiene 13 aufgebracht wird.

Beim Ausführungsbeispiel der rechten Hälfte der Fig. 2 wird ein streifenförmiges Abdeckblech 30 in die Längsnut 21 eingelegt und dort z.B. mittels einer geeigneten Kunststoffmasse 31 eingeklebt, die zusätzlich Innenräume 23 der Durchgangs-Stufenbohrung 20 ausfüllen kann.

Auf diese Weise wird zwar das Abdeckblech 30 vollflächig aufgeklebt und hält so besonders gut, dies kann jedoch gelegentlich dann von Nachteil sein, wenn das Abdeckblech 30 wieder entfernt werden muß, um bei größeren Montagearbeiten die Führungsschiene 13 wieder vom Maschinenbett 15 loszuschrauben. Wenn dann die Innenräume 23 der Stufenbohrung mit Klebstoff, beispielsweise Kunstharz, ausgefüllt sind, muß dieses zunächst entfernt werden, ehe man die Maschinenschrauben 14 wieder lösen kann.

Es ist daher, wie in der linken Hälfte von Fig. 2 angedeutet, eine weitere Ausführungsform der Erfindung besonders bevorzugt, bei der das Abdeckblech 30 nut bereichsweise aufgeklebt wird, nämlich in den Bereichen, die zwischen den Durchgangs-Stufenbohrungen 20 liegen. Dies kann z.B. dadurch erfolgen, daß in diesen Oberflächenbereichen punktweise ein Klebstoff aufgebracht und das Abdeckblech 30 auf diese Weise ebenfalls punktweise fixiert wird.

Die Innenräume 23 der Durchgangs-Stufenbohrung 20 bleiben bei dieser Vorgehensweise frei, so daß bei einer Entfernung des Abdeckblechs 30 die Schraubenköpfe 22 der Maschinenschrauben 14 unmittelbar frei liegen.

Die Dicke des Abdeckblechs 30 wird dabei zweckmäßigerweise so gewählt, daß im eingeklebten Zustand des Abdeckblechs 30 eine plane, durchgehende Oberfläche 32 an der Führungsschiene 13 entsteht.

Die Oberfläche 32 der Oberseite 25 braucht nach dem Einbringen des Abdeckblechs 10 nicht nachbearbeitet zu werden, weil -wie weiter oben im einzelnen erläutert -- in die Oberseite 25 keine Kräfte eingeleitet werden, weil diese lediglich auf die Auflageflächen 29 wirken.

Fig. 3 zeigt eine Variante, bei der ein ebenfalls längs durchgehendes Abdeckblech 40 auf eine Oberfläche 42 der Führungsschiene 13a aufgeklebt wurd, die beim dargestellten Beispielsfall der Fig. 3 keine durchgehende Längsnut nach Art der Führungsschiene 13 der Fig. 1 und 2 aufweist, was jedoch nicht zwingend ist, weil das Ausführungsbeispiel der Fig. 3 sich auch für Führungsschienen nach Art der Fig. 1 und 2 eignet.

Auch das Abdeckblech 40 beim Ausführungsbeispiel der Fig. 3 ist mittels eines geeigneten Klebers, beispielsweise eines Kunststoffs 42 auf die Oberfläche 41 aufgeklebt.

## Ansprüche

1. Werkzeugmaschine mit zwei entlang einer Achse (16) relativ zueinander verfahrbaren Bewegungseinheiten, insbesondere einem Spindelstock (10) und einem Maschinenbett (15) mit einer an einer Bewegungseinheit befestigten Führungsschiene (13), mit einem Lager (12) zum Führen der verfahrbaren anderen Bewegungseinheit an einer Seite (24) der Führungsschiene (13), wobei die Führungsschiene (13) von ihrer Oberseite (25) ausgehende Durchgangs-Stufenbohrungen (20) für Befestigungsschrauben (14) aufweist und Mittel zum Abdecken eines Innenraums (23) der Durchgangs-Stufenbohrungen (20) oberhalb der eingeschraubten Befestigungsschrauben (14) vorgesehen sind, dadurch gekennzeichnet, daß die Durchgangs-Stufenbohrungen (20) an der Oberseite (25) mittels eines streifenförmigen Abdeckteils abgedeckt sind, das sich in Richtung der Achse (16) und vorzugsweise über die ganze Länge der Führungsschiene (13) erstreckt, daß das Lager (12) an einer Längsseite (24) der Führungsschiene (13) angeordnet ist und daß die Oberseite (25) von Krafteinleitung frei ist.

2. Werkzeugmaschine nach Anspruch 1, dadurch gekennzeichnet, daß das Abdeckteil als aufgeklebtes Abdeckblech (30, 40) ausgebildet ist.

3. Werkzeugmaschine nach Anspruch 2, dadurch gekennzeichnet, daß das Abdeckblech (30; 40) nur in Bereichen außerhalb der Durchgangsbohrungen (20) auf die Führungsschiene (13) aufgeklebt ist.

4. Werkzeugmaschine nach einem der Ansprüche 1 bis 3 dadurch gekennzeichnet, daß das Abdeckteil in eine Längsnut (21) eingelegt ist, die sich über die Länge der Führungsschiene (13) erstreckt und in die die Innenräume (23) der Durchgangs-Stufenbohrungen (20) münden.

5. Werkzeugmaschine nach einem der Ansprüch 1 bis 3, dadurch gekennzeichnet, daß das Abdeckteil sich über die gesamte Breite der Führungsschiene (13) erstreckt.

Fig. 1

Fig.2

Fig.3

1401P114EP

| | Europäisches Patentamt | **EUROPÄISCHER RECHERCHENBERICHT** | Nummer der Anmeldung |
| | | | EP 88 11 6530 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 503 007 (CENTRE D'ETUDES DU FRAISAGE) * Anspruch 1; Seite 3, Zeilen 27-34; Figuren 1-3 * --- | 1 | B 23 Q 1/26 F 16 C 29/08 B 23 Q 11/08 F 16 C 29/04 |
| Y | GB-A-2 095 141 (SCHWEIZERISCHE INDUSTRIE GESELLSCHAFT) * Anspruch 1; Spalte 1, Zeile 120 - Spalte 2, Zeile 17; Figur 4 * --- | 1 | |
| Y | EP-A-0 238 708 (MATSUSHIA ELECTRIC INDUSTRIAL) * Anspruch 1; Figur 1 * --- | 1 | |
| A | DE-A-3 333 795 (TERAMACHI HIROSHO) * Anspruch 1; Figuren 13,14,17,18; Bezugszeichen 3 * --- | 1 | |
| D,A | DD-A- 237 805 (VEB "HERMANN MATERN") * Anspruch 1; Figur 1 * ----- | 1 | |

| | RECHERCHIERTE SACHGEBIETE (Int. Cl.4) |
|---|---|
| | B 23 Q 1/00 B 23 Q 11/00 F 16 C 29/00 |

Der vorliegende Recherchenbericht wurde für alle Patentansprüche erstellt

| Recherchenort | Abschlußdatum der Recherche | Prüfer |
|---|---|---|
| BERLIN | 16-12-1988 | BERNAS Y.N.E. |